# EUROPÄISCHE PATENTSCHRIFT

(11) **EP 2 439 434 B1**
(45) Veröffentlichungstag und Bekanntmachung des Hinweises auf die Patenterteilung: **29.07.2015**
(21) Anmeldenummer: 11008019.9
(22) Anmeldetag: 04.10.2011
(51) Int. Cl.: F16K 31/00, F16K 31/06, F23N 5/10, F23N 1/00

(54) **Ventilvorrichtung mit Magneteinsatz**
Valve with magnetic insert
Soupape avec un insert magnétique

(30) Priorität: 07.10.2010 DE 202010014044 U
(43) Veröffentlichungstag der Anmeldung: 11.04.2012
(73) Patentinhaber: Truma Gerätetechnik GmbH & Co. KG, 85640 Putzbrunn (DE)
(72) Erfinder: Haas, Martin, 81241 München (DE)
(74) Vertreter: Müller Hoffmann & Partner

(56) Entgegenhaltungen:
- EP-A2- 1 564 487
- DE-U1-202005 021 724
- US-A1- 2004 238 030

## Beschreibung

Die Erfindung betrifft eine Ventilvorrichtung mit einem in der Ventilvorrichtung bewegbaren Magneteinsatz. Eine gattungsgemäße Ventilvorrichtung ist aus US 2004/0238030 A1 bekannt.

Bei Gasheizgeräten werden Zündsicherungsventile eingesetzt, die einen Magneteinsatz aufweisen. Bei Betrieb eines derartigen Gasheizgerätes liefert ein Thermoelement, das durch eine Flamme erhitzt wird, einen elektrischen Strom (auch als Thermohaltestrom bezeichnet), durch den ein Elektromagnet in dem Magneteinsatz angeregt wird. Mittels der durch den erregten Elektromagneten erzeugten magnetischen Kraft wird eine Verschlusseinrichtung des Magneteinsatzes, z.B. ein Ventilteller, von dem Elektromagneten so festgehalten, dass ein Gasauslass offen gehalten wird. Dabei strömt das Gas, das die Flamme speist, durch das Zündsicherungsventil.

Erlischt die Flamme, liefert das Thermoelement keinen Thermohaltestrom mehr, und die Verschlusseinrichtung wird von dem nun nicht mehr erregten Elektromagneten nicht mehr festgehalten. Mittels einer Feder wird die Verschlusseinrichtung so verschoben, dass die Verschlusseinrichtung den Gasauslass versperrt und kein Gas mehr aus dem Gasheizgerät austreten kann.

Üblicherweise wird zum Starten des Heizgerätes das Zündsicherungsventil durch ein manuelles Andrücken der Verschlusseinrichtung gegen die Federkraft der Feder an den im Gehäuse fest gelagerten Elektromagneten solange offen gehalten, bis das Thermoelement den Thermohaltestrom zum Festhalten der Verschlusseinrichtung am Elektromagneten liefert.

Bei solchen herkömmlichen Ventilvorrichtungen ist es daher erforderlich, die Verschlusseinrichtung zumindest so lange zu halten, bis der Thermohaltestrom fließt. Dies ist für den Benutzer mühsam und muss gegebenenfalls mehrfach wiederholt werden, wenn er zu früh die Verschlusseinrichtung loslässt.

Der Erfindung liegt daher die Aufgabe zugrunde, eine Ventilvorrichtung anzugeben, bei der der Startvorgang für den Nutzer vereinfacht und komfortable durchführbar ist.

Die Aufgabe wird durch eine Ventilvorrichtung gemäß Patentanspruch 1 gelöst. Weiterentwicklungen der Ventilvorrichtung sind den abhängigen Patentansprüchen zu entnehmen.

Die erfindungsgemäße Ventilvorrichtung für ein gasbetriebenes Gerät weist einen Ventilkörper mit einem Gaseinlass und einem Gasauslass auf. In dem Ventilkörper ist ein Magneteinsatz angeordnet. Der Magneteinsatz weist einen zwischen einer ersten und zweiten Stellung relativ zum Ventilkörper linear hin- und herbewegbaren Elektromagneten und eine relativ zum Elektromagneten linear verschiebbaren Verschlusseinrichtung zum Versperren und Öffnen des Gasauslasses oder des Gaseinlasses auf. Ferner weist die Ventilvorrichtung eine Haltestromzuführung zum Zuführen eines Starthaltestroms zum Erregen des Elektromagneten auf. Die Verschlusseinrichtung ist durch den erregten Elektromagneten in einer Halteposition relativ zum Elektromagneten festhaltbar, und die Verschlusseinrichtung kann durch ein Bewegen des Elektromagneten aus der ersten Stellung in die zweite Stellung in die Halteposition gebracht werden. Ferner ist der Elektromagnet aus der zweiten Stellung in die erste Stellung bewegbar, während die Verschlusseinrichtung relativ zu dem Elektromagneten in der Halteposition verbleibt.

Die Verschlusseinrichtung kann ein Einrichtung aufweisen, die passend zu der zu verschließenden Öffnung gestaltet ist und die zu verschließende Öffnung versperren kann und die durch eine vom erregten Elektromagneten ausgehende magnetische Kraft angezogen werden kann. Die Verschlusseinrichtung kann tellerförmig, zylinderförmig oder kegelförmig sein. Die Verschlusseinrichtung kann - wenigstens teilweise - ein magnetisches oder magnetisierbares Material aufweisen.

Die Verschlusseinrichtung kann einen Anker und ein mit dem Anker verbundenes Verschlusselement, beispielsweise einen Teller beziehungsweise Ventilteller, aufweisen. Der Anker kann als dasjenige Element der Verschlusseinrichtung dienen, das von der magnetischen Kraft, die von dem erregten Elektromagneten ausgeht, angezogen wird. Das Verschlusselement kann als dasjenige Element der Verschlusseinrichtung dienen, durch das der Gaseinlass bzw. der Gasauslass versperren wird. Der Anker und das Verschlusselement können gemeinsam bewegbar sein, wenn eine Kraft lediglich auf den Anker oder das Verschlusselement wirkt. Anker und Verschlusselement können starr miteinander verbunden oder auch einstückig sein.

Durch ein Bewegen des Elektromagneten aus der ersten Stellung in die zweite Stellung kann der Abstand zwischen dem Elektromagneten und der Verschlusseinrichtung verkleinert werden. Mit abnehmendem Abstand zwischen Elektromagneten und Verschlusseinrichtung gibt es einen maximalen Abstand, unterhalb dem die Verschlusseinrichtung von dem Elektromagneten festgehalten werden kann. Daher stellt jede Position der Verschlusseinrichtung, bei der diese einen geringeren als diesen maximalen Abstand von dem Elektromagneten hat, eine Halteposition dar. Der maximale Abstand kann auch so gering sein, dass sich die Verschlusseinrichtung lediglich bei Kontakt mit dem Elektromagneten in der Halteposition befindet, beziehungsweise wenn die Verschlusseinrichtung an dem Elektromagneten zum Anschlag kommt.

Indem der Elektromagnet in dem Ventilkörper beweglich angeordnet ist, kann der Elektromagnet in Richtung der Verschlusseinrichtung bewegt und der Abstand soweit verringert werden, dass die Verschlusseinrichtung in die Halteposition gelangt, d.h. in eine Position, in der eine von dem erregten Elektromagneten ausgehende magnetische Kraft ausreichend groß sein kann, um die Verschlusseinrichtung festzuhalten. Fließt in dieser Halteposition ein elektrischer Strom, der den Elektromagneten erregt, zum Beispiel der Haltestrom, kann die Verschlusseinrichtung von dem Elektromagneten festgehalten werden. Aus dieser Stellung heraus kann bei einem Verschieben des erregten Elektromagneten, zum Beispiel aus der zweiten Stellung in die erste Stellung, die Verschlusseinrichtung gemeinsam mit dem Elektromagneten verschoben werden.

In Abhängigkeit von der Position der Verschlusseinrichtung ist der Gasauslass beziehungsweise der Gaseinlass geöffnet oder versperrt. Daher kann durch die bewegliche Anordnung des Elektromagneten im Ventilkörper und die Wechselwirkung zwischen erregtem Elektromagneten und Verschlusseinrichtung erreicht werden, dass der Gasauslass beziehungsweise der Gaseinlass geöffnet wird.

In der Ventilvorrichtung kann die Verschlusseinrichtung in einer Geschlossenstellung, in der der Gasauslass oder der Gaseinlass durch die Verschlusseinrichtung versperrt ist, angeordnet sein, wenn sich der Elektromagnet in der zweiten Stellung befindet.

Ferner kann die Verschlusseinrichtung in einer Offenstellung, in der der Gasauslass oder der Gaseinlass geöffnet ist, angeordnet sein, wenn sich der Elektromagnet in der ersten Stellung befindet und die Verschlusseinrichtung in der Halteposition gehalten wird.

Mit anderen Worten: Durch ein Verschieben des Elektromagneten und eine Steuerung des Haltestroms kann die Stellung der Verschlusseinrichtung in der Geschlossenstellung oder der Offenstellung eingestellt werden.

In der vorliegenden Beschreibung werden Ventilvorrichtungen zum Verschließen und Öffnen des Gaseinlasses oder des Gasauslasses im Ventilkörper beschrieben. Dementsprechend sind die Ausführungen in der vorliegenden Beschreibung so zu verstehen, dass sie, soweit nicht explizit anders beschrieben, gleichermaßen Ventilvorrichtungen zum Verschließen und Öffnen eines Gaseinlass als auch Ventilvorrichtungen zum Verschließen und Öffnen eines Gasauslass betreffen.

Die Ventilvorrichtung kann ferner eine steuerbare Hilfsenergiequelle aufweisen, von der der Starthaltestrom geliefert wird, mit dem der Elektromagnet erregbar ist. Durch die steuerbare Hilfsenergiequelle kann beispielsweise der Starthaltestrom zu einem bestimmten Zeitpunkt und/oder für einen vorbestimmten Zeitraum lieferbar sein. Der Startzeitpunkt kann beispielsweise durch den Beginn eines Startvorgangs zum Öffnen der Ventilvorrichtung bestimmt sein. Das Starten kann beispielsweise durch ein Betätigen eines Aktuators für das Bewegen des Elektromagneten, das Drücken eines Starters, durch den das Öffnen der Ventilvorrichtung startbar ist, oder ein von außen zugeführtes Signal, beispielsweise von einem Messsensor in einem Thermostaten bestimmt werden.

Die Ventilvorrichtung kann eine im Ventilkörper bewegbare Aufnahme zum Aufnehmen des Magneteinsatzes aufweisen, wobei der Elektromagnet durch ein Bewegen der Aufnahme aus der ersten Stellung in die zweite Stellung bewegt werden kann.

In eine solche bewegbare Aufnahme kann ein an sich bekannter Magneteinsatz eingesetzt werden. Auch ein Austauschen des Magneteinsatzes kann erleichtert werden. Der Magneteinsatz kann beispielsweise ein Magneteinsatz sein, wie er in DE 20 2005 021 724 U1 beschrieben ist.

Ein den Elektromagneten aufweisender Teil des Magneteinsatzes kann mit der Aufnahme fest verbunden sein.

Ferner kann die Ventilvorrichtung einen Aktuator zum Bewegen des Magneteinsatzes aufweisen. Dabei kann der Aktuator direkt auf den Magneteinsatz einwirken oder, beispielsweise über die Aufnahme für den Magneteinsatz, indirekt auf den Magneteinsatz zum Bewegen des Magneteinsatzes einwirken. Durch den Aktuator kann der Teil des Magneteinsatzes, der den Elektromagneten aufweist, bewegt werden. Beim Bewegen des Elektromagneten kann die Verschlusseinrichtung in ihrer Position verbleiben, wenn sie sich nicht in der Halteposition befindet und der Elektromagnet nicht erregt ist.

Der Aktuator kann manuell bedient werden und/oder eine Vorrichtung zum automatischen Bewegen des Magneteinsatzes aufweisen. Ferner kann der Aktuator eine Regeleinrichtung zum gesteuerten Betätigen des Aktuators aufweisen. Dadurch kann der Aktuator auch in einen Thermostaten integriert werden.

Der Aktuator kann einen Schrittmotor mit oder ohne Stromerkennung, einen Hubmagneten, einen Druckmagneten, eine Spindel oder ein magnetisches, hydraulisches oder pneumatisches Stellglied aufweisen.

Die Ventilvorrichtung kann eine Rückstelleinrichtung, zum Beispiel eine Feder zum Rückbewegen des Elektromagneten aus der zweiten Stellung in die erste Stellung aufweisen. Durch Verschieben des Magneteinsatzes aus der ersten Stellung in die zweite Stellung kann eine dieser Verschiebung entgegengesetzte Federkraft erzeugt werden, sodass bei einem Entfernen der Aktuator-Kraft, mit der der Magneteinsatz aus der ersten Stellung in die zweite Stellung verschoben wurde, der Magneteinsatz aus der zweiten Stellung wieder in die erste Stellung gebracht werden. Indem die Kraft der Rückstelleinrichtung gerade durch das Verschieben des Elektromagneten erzeugt wird, kann sichergestellt werden, dass ohne die Aktuator-Kraft der Elektromagnet immer in der ersten Stellung angeordnet ist.

Der Magneteinsatz kann eine Feder zum Beaufschlagen der Verschlusseinrichtung mit einer Vorspannung aufweisen. Bei erregtem Elektromagneten kann die Verschlusseinrichtung gegen die Vorspannkraft der Feder in der Halteposition festgehalten werden. Bei nicht erregtem Elektromagneten kann die Verschlusseinrichtung durch die Vorspannkraft von dem Elektromagneten weggedrückt werden. Durch die Vorspannkraft kann somit sichergestellt werden, dass die Verschlusseinrichtung weiter als in der Halteposition von dem Elektromagneten beabstandet ist, wenn der Elektromagnet sich in der ersten Stellung befindet und nicht erregt wird. Dabei kann die Position, in die die Verschlusseinrichtung gedrückt wird, der Geschlossenstellung der Verschlusseinrichtung entsprechen. Damit kann sichergestellt werden, dass ein Gasfluss durch die zu verschließende Öffnung, Gasauslass oder Gaseinlass, verhindert wird, wenn der Elektromagnet nicht erregt wird.

Die Vorspannkraft kann den Gasauslass oder den Gaseinlass geschlossen halten, wenn die Verschlusseinrichtung nicht in der Halteposition gehalten wird.

Ferner kann die Verschlusseinrichtung bei geschlossenem Gasauslass oder Gaseinlass gegen eine um die jeweilige zu verschließende Öffnung, Gasauslass beziehungsweise Gaseinlass, gebildete Wandung des Ventilkörpers drücken.

Ferner kann die Ventilvorrichtung eine Steuereinrichtung zum Steuern des Starthaltestroms für einen vorbestimmten Zeitraum aufweisen. Diese Steuereinrichtung kann bewirken, dass nach dem Verstreichen eines vorbestimmten Zeitraums der Gasfluss gestoppt wird, indem der Elektromagnet nicht mehr durch den Starthaltestrom erregt wird, sich die Verschlusseinrichtung von dem Elektromagneten löst und die Verschlusseinrichtung aus der Halteposition in die Geschlossenstellung verschoben wird. Dadurch kann die Ventilvorrichtung in einem Zündsicherungssystem verwendet werden, bei dem der Gasfluss gestoppt wird, wenn kein anderer Haltestrom, beispielsweise ein Thermohaltestrom von einem Thermoelement, den Elektromagneten erregt.

Der Ventilkörper kann eine längliche Hohlkörperform aufweisen, wobei der Magneteinsatz entlang einer Längsrichtung der länglichen Hohlkörperform bewegbar gelagert sein kann.

Ferner kann die Ventilvorrichtung eine Thermostromzuführung zum Zuführen eines Thermohaltestroms von einem Thermoelement zum Elektromagneten zum Erregen des Elektromagneten aufweisen. Durch den Thermohaltestrom kann die Verschlusseinrichtung in der Halteposition festgehalten werden.

Die Haltestromzuführung zum Zuführen des Starthaltstroms kann mit der Thermostromzuführung verbunden sein. Dadurch reicht ein einzelner Kontakt am Magneteinsatz für das Zuführen der beiden Halteströme, Starthaltestrom und Thermohaltestrom, aus. Es können herkömmliche Magneteinsätze verwendet werden, die nur einen Kontakt zum Zuführen eines Haltestroms aufweisen.

Der Starthaltestrom kann fließen, wenn sich der Elektromagnet in der zweiten Stellung befindet.

Die Verschlusseinrichtung kann bei Erregen des Elektromagneten mit dem Starthaltestrom mit einer bestimmten Haltestromstärke durch den erregten Elektromagneten in der Halteposition festgehalten werden. Die durch diese bestimmte Haltestromstärke mittels des Elektromagneten erzeugte magnetische Kraft kann zu klein sein, um die Verschlusseinrichtung aus der Position, in der die Verschlusseinrichtung weiter von dem Elektromagneten als in der Halteposition beabstandet ist, in die Halteposition zu verschieben.

Der Starthaltestrom kann so geregelt werden, dass er maximal diese bestimmte Haltestromstärke liefert. Dadurch kann erreicht werden, dass auch bei unbeabsichtigtem Fluss des Haltestroms ohne Betätigen des Aktuators die Verschlusseinrichtung in der Geschlossenstellung verbleibt.

Ferner kann in dem Ventilkörper ein Zündbrennergasauslass vorgesehen sein, der über einen Strömungskanal mit dem Gasauslass verbunden ist, und einen in dem Ventilkörper vorgesehenen Hauptbrennergasauslass, dem über eine Öffnung in dem Strömungskanal Gas zugeführt werden kann, aufweisen.

In einer solchen Vorrichtung kann der Gasauslass ein Gasauslass im Inneren des Ventilkörpers sein, der verschiedene Abschnitte des Ventilkörpers für den Gasfluss miteinander verbindet.

Die Ventilvorrichtung kann ferner eine Steuereinrichtung mit einem Regelkolben zum Verschließen und Öffnen der Öffnung am Strömungskanal aufweisen. Der Gaseinlass und der Magneteinsatz können in einem ersten Abschnitt des Ventilkörpers und der Hauptbrennergasauslass und der Regelkolben können in einem zweiten Abschnitt des Ventilkörpers angeordnet sein.

Durch eine solche Aufteilung in den ersten Abschnitt und den zweiten Abschnitt können die Funktionalität des bewegbaren Magneteinsatzes und eine Regelung des Gasflusses durch den Hauptbrennergasauslass unabhängig voneinander in einer Ventilvorrichtung integriert werden. Dies erlaubt es, den bewegbaren Magneteinsatz in herkömmliche Ventilvorrichtungen, die den Regelkolben aufweisen, ohne größere Änderungen im Bereich des Regelkolbens zu integrieren.

Ferner kann in einem Verfahren eine erfindungsgemäße Ventilvorrichtung betrieben werden. Die Verfahrensschritte sind dabei durch die Merkmale der Elemente der erfindungsgemäßen Ventilvorrichtung bestimmt.

Die Ventilvorrichtung wird nachfolgend anhand eines Beispiels und unter Zuhilfenahme der begleitenden Figuren näher erläutert.

Die Figuren zeigen:
- **Fig. 1**: einen schematischen Längsschnitt durch eine Ventilvorrichtung vor Beginn des Startvorgangs,
- **Fig. 2**: die Ventilvorrichtung gemäß Fig. 1 nach Beginn des Startvorgangs bei geschlossenem Gasauslass, und
- **Fig. 3**: die Ventilvorrichtung gemäß Fig. 1 und Fig. 2 bei geöffnetem Gasauslass.

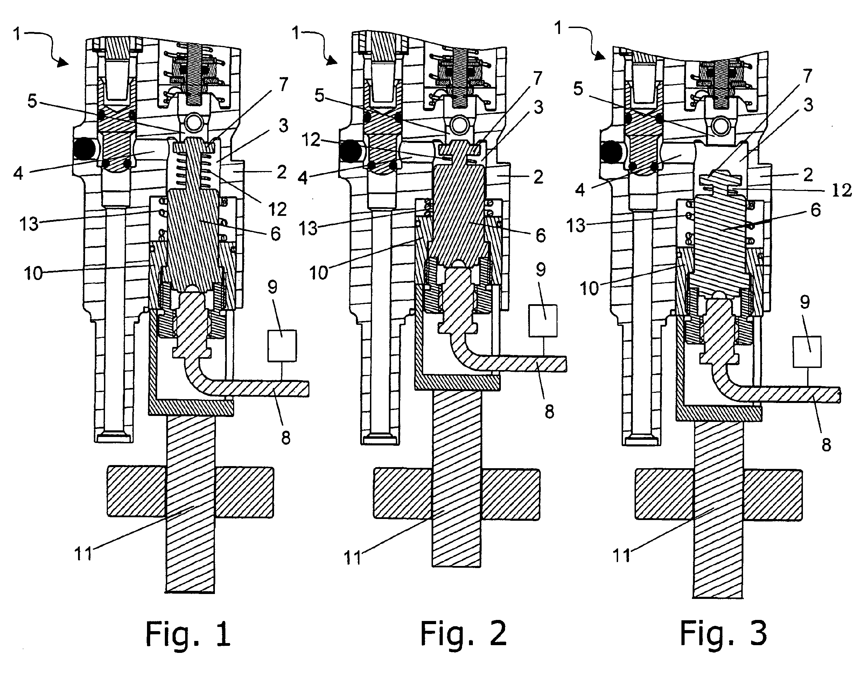

Fig. 1 bis 3 zeigen eine Ausführungsform einer erfindungsgemäßen Ventilvorrichtung 1 in verschiedenen Betriebszuständen. Für dieselben Elemente der Ventilvorrichtung 1 sind in den Figuren 1 bis 3 dieselben Bezugszeichen verwendet.

Im Folgenden werden zunächst anhand der Fig. 1 die konstruktiven Merkmale der Ventilvorrichtung 1 beschrieben und danach, anhand der Figuren 1 bis 3, die Funktionsweise der Ventilvorrichtung 1 erläutert.

Die Ventilvorrichtung 1 weist einen Ventilkörper 2 auf. In dem Ventilkörper 2 befindet sich eine Kammer 3 mit einem Gaseinlass 4 und einem Gasauslass 5.

In dem Ventilkörper 2 ist ferner ein Magneteinsatz 6 bewegbar angeordnet. Der Magneteinsatz 6 weist eine Verschlusseinrichtung 7 zum Verschließen und Öffnen des Gasauslasses 5 und einen nicht dargestellten Elektromagneten auf. Der Elektromagnet ist in dem Magneteinsatz 6 in einem von der Verschlusseinrichtung 7 beabstandeten Teil des Magneteinsatzes 6 angeordnet. Ferner weist die Ventilvorrichtung 1 eine Haltestromzuführung 8 zum Zuführen eines Starthaltestroms zum Erregen des Elektromagneten auf. Die Haltestromzuführung 8 ist mit einer Hilfsenergiequelle 9 verbunden. Ferner kann über die Haltestromzuführung 8 auch ein Thermohaltestrom von einem nicht dargestellten Thermoelement zuführbar sein.

Der Magneteinsatz 6 ist in dieser Ausführungsform in einer Aufnahme 10 angeordnet, die mit Hilfe eines Aktuators 11 in dem Ventilkörper bewegbar ist. Der Magneteinsatz 6 weist ferner eine Feder 12 auf, durch die die Verschlusseinrichtung 7 von dem Elektromagneten weggedrückt wird.

Ferner weist die Ventilvorrichtung 1 eine Rückstelleinrichtung in Form einer weiteren Feder 13 auf, deren Kraft entgegen der Kraft des Aktuators 11 wirkt und durch die die Aufnahme 10 gemeinsam mit dem Elektromagneten entgegen der Kraftwirkung des Aktuators 11 verschiebbar ist.

Im Folgenden wird anhand der Figuren 1 bis 3 die Funktionsweise der Ventilvorrichtung 1 erläutert.

In Fig. 1 sind die Elemente der Ventilvorrichtung 1, das heißt der Magneteinsatz 6 mit der Verschlusseinrichtung 7 der Aufnahme 10, und der Aktuator 11, in der Stellung dargestellt, in der sie sich vor Beginn eines Startvorganges zum Öffnen des Ventils des gasbetriebenen Gerätes befinden.

Die Verschlusseinrichtung 7 befindet sich in der Geschlossenstellung, bei der der Gasauslass 5 durch die Verschlusseinrichtung 7 versperrt ist. Der Elektromagnet, nicht dargestellt, der sich im unteren Teil des Magneteinsatzes 6 befindet, ist in der ersten, unteren Stellung angeordnet und befindet sich in der Aufnahme 10 in dem Ventilkörper 2. Der Aktuator 11 befindet sich in der zu der ersten Stellung des Elektromagneten gehörenden Position.

Dadurch ist ein Gasfluss vom Gaseinlass 4 durch die Kammer 3 und den Gasauslass 5 gesperrt. Ist der Gasauslass 5 der Ventilvorrichtung 1 mit einer Zündflamme in einer Gasheizung verbunden, so gelangt in diesem Zustand kein Gas zu der Zündflamme.

Durch ein Bewegen des auf die Aufnahme 10 wirkenden Aktuators 11 nach oben wird der in der Aufnahme 10 angeordnete untere Teil des Magneteinsatzes 4, der den Elektromagneten aufweist, linear in Richtung des Gasauslasses 5 verschoben, wie Fig. 2 zeigt.

In Fig. 2 sind der Aktuator 11, die Aufnahme 10, und der Magneteinsatz 6 in der zweiten, oberen Stellung dargestellt. Im Vergleich zu den Positionen, die in Fig. 1 dargestellt sind, befinden sich der untere Teil des Magneteinsatzes 6, der den Elektromagneten aufweist, die Aufnahme 10 und der Aktuator 11 näher an der Verschlusseinrichtung 7 und näher zum Gasauslass 5 als in der Ausgangsstellung.

Ferner sind die Feder 12 und die Feder 13 zusammengedrückt. In dieser Stellung befinden sich die Verschlusseinrichtung 7 und der Elektromagnet in dem unteren Teil des Magneteinsatzes 6 in einem Abstand, bei dem die Verschlusseinrichtung 7 von dem erregten Elektromagneten festgehalten werden kann. Somit befindet sich die Verschlusseinrichtung 7 in einer Halteposition relativ zum Elektromagneten.

Fließt in der in Fig. 2 dargestellten Stellung der Ventilvorrichtung 1 ein Haltestrom, der über die Haltestromzuführung 8 zu dem Elektromagneten geführt wird, hält der Elektromagnet die Verschlusseinrichtung 7 in der Halteposition. Wenn die Kraft des Aktuators 11 nicht mehr wirkt, die die Aufnahme 10 und damit den Magneteinsatz 6 in der Position näher zum Gasauslass 5 hält, wird durch die Kraft der Feder 13 die Aufnahme 10, mit dem darin angeordneten Magneteinsatz 6 von dem Gasauslass 5, also nach unten wegbewegt, wie Fig. 3 zeigt.

Ist der Elektromagnet während dieser Bewegung aus der zweiten Stellung in die erste Stellung erregt, hält der Elektromagnet die Verschlusseinrichtung 7 in der Halteposition fest und die Verschlusseinrichtung 7 wird von dem Gasauslass 5 weggezogen. Eine Anordnung der Elemente in der Ventilvorrichtung 1 nach diesem Bewegen des erregten Elektromagneten aus der zweiten Stellung in die erste Stellung ist in Fig. 3 dargestellt.

Der Elektromagnet befindet sich in der ersten Stellung und die Verschlussvorrichtung 7 steht, gehalten durch den Elektromagneten, in einer Offenstellung. Damit ist der Gasauslass 5 geöffnet und ein dem Gaseinlass 4 zugeführtes Gas kann durch die Kammer 3 aus dem Gasauslass 5 ausströmen. Dieses ausströmende Gas kann durch eine Zündflamme entzündet werden, die ein Thermoelement erhitzt, durch das ein Thermohaltestrom dem Elektromagneten zugeführt werden kann. Durch diesen Thermohaltestrom kann der Elektromagnet erregt werden und bei entzündeter Zündflamme die Verschlusseinrichtung 7 in Halteposition und damit in der Offenstellung halten, so dass der Gaszufluss offen bleibt.

Wird in Fig. 3 der Starthaltestrom unterbrochen, ohne dass der Thermohaltestrom fließt, hält der Elektromagnet die Verschlusseinrichtung 7 nicht in der Halteposition. Durch die Feder 12 wird dann die Verschlusseinrichtung 7 in Richtung des Gasauslasses 5 so weit nach oben verschoben, bis der Gasauslass 5 durch die Verschlusseinrichtung 7 verschlossen ist. Die Verschlusseinrichtung 7 befindet sich dann in der Geschlossenstellung. Dies entspricht der in Fig. 1 dargestellten Stellung der beweglichen Elemente der Ventilvorrichtung 1. Es kann ein neuer Startvorgang gestartet werden.

Die Hilfsenergiequelle 9 kann mit einer nicht dargestellten Steuereinrichtung verbunden sein, die vorgibt, dass der Starthaltestrom nur für eine vorbestimmte Zeitdauer fließt. Damit kann gesteuert werden, wie viel Gas durch die Ventilvorrichtung nach Betätigung des Aktuators 11 fließen kann, wenn aus irgendeinem Grund kein Thermohaltestrom zu fließen beginnt. Dadurch stoppt die Ventilvorrichtung nach Ablauf dieser vorbestimmten Zeit wieder automatisch den Gasfluss, wenn es nicht zu einem Entzünden des Gases kommt.

Die Ventilvorrichtung gemäß der Ausführungsform in den Figuren 1 bis 3 verschließt bzw. öffnet den Gasauslass 5. Entsprechend kann in einer weiteren Ausführungsform der Ventilvorrichtung der Gaseinlass 4 versperrt und geöffnet werden.

## Patentansprüche

1. Ventilvorrichtung (1) für ein gasbetriebenes Gerät, mit
- einem einen Gaseinlass (4) und einem Gasauslass (5) aufweisenden Ventilkörper (2);
- einem in dem Ventilkörper (2) angeordneten Magneteinsatz (6) mit einem Elektromagneten und mit einer relativ zum Elektromagneten linear verschiebbaren Verschlusseinrichtung (7) zum Versperren und Öffnen des Gasauslasses (5) oder des Gaseinlasses (4); und
- einer Haltestromzuführung (8) zum Zuführen eines Starthaltestroms zum Erregen des Elektromagneten; wobei
- die Verschlusseinrichtung (7) durch den erregten Elektromagneten in einer Halteposition relativ zum Elektromagneten festhaltbar ist;
**dadurch gekennzeichnet, dass** der Elektromagnet zwischen einer ersten und einer zweiten Stellung relativ zum Ventilkörper (2) linear hin- und herbewegbar ist, dass
- die Verschlusseinrichtung (7) durch ein Bewegen des Elektromagneten aus der ersten Stellung in die zweite Stellung in die Halteposition bringbar ist, und dass
- der erregte Elektromagnet aus der zweiten Stellung in die erste Stellung bewegbar ist, während die Verschlusseinrichtung (7) relativ zu dem Elektromagneten in der Halteposition verbleibt.

2. Ventilvorrichtung (1) nach Anspruch 1, wobei
- die Verschlusseinrichtung (7) in einer Geschlossenstellung, in der der Gasauslass (5) oder der Gaseinlass (4) durch die Verschlusseinrichtung (7) versperrt ist, angeordnet ist, wenn sich der Elektromagnet in der zweiten Stellung befindet: und
- die Verschlusseinrichtung (7) in einer Offenstellung, in der der Gasauslass (5) oder der Gaseinlass (4) geöffnet ist, angeordnet ist, wenn sich der Elektromagnet in der ersten Stellung befindet und die Verschlusseinrichtung (7) in der Halteposition gehalten ist.

3. Ventilvorrichtung (1) nach einem der vorangehenden Ansprüche, ferner mit
- einer steuerbaren Hilfsenergiequelle (9) für den Starthaltestrom.

4. Ventilvorrichtung (1) nach einem der vorangehenden Ansprüche, ferner mit
- einer im Ventilkörper (2) bewegbaren Aufnahme (10) zum Aufnehmen des Magneteinsatzes (6); wobei
- der Elektromagnet durch ein Bewegen der bewegbaren Aufnahme (10) aus der ersten Stellung in die zweite Stellung bewegbar ist.

5. Ventilvorrichtung (1) nach einem der vorangehenden Ansprüche, ferner mit
- einem Aktuator (11) zum Bewegen des Magneteinsatzes (6).

6. Ventilvorrichtung (1) nach einem der Ansprüche 5, wobei der Aktuator (11) einen Schrittmotor mit oder ohne Stromerkennung, einen Hubmagneten, einen Drückmagneten, eine Spindel oder ein magnetisches, hydraulisches oder pneumatisches Stellglied aufweist.

7. Ventilvorrichtung (1) nach einem der vorangehenden Ansprüche, ferner mit
- einer Rückstelleinrichtung (13) zum Rückbewegen des Elektromagneten.

8. Ventilvorrichtung (1) nach einem der vorangehenden Ansprüche, wobei
- der Magneteinsatz (6) eine Feder (12) zum Beaufschlagen der Verschlusseinrichtung (7) mit einer Vorspannkraft aufweist;
- bei erregtem Elektromagneten die Verschlusseinrichtung (7) gegen die Vorspannkraft der Feder (12) in der Halteposition festhaltbar ist;

9. Ventilvorrichtung (1) nach Anspruch 8, wobei durch die Vorspannkraft der Gasauslass (5) oder der Gaseinlass (4) geschlossen gehalten wird, wenn die Verschlusseinrichtung (7) nicht in der Halteposition gehalten wird.

10. Ventilvorrichtung (1) nach einem der vorangehenden Ansprüche, wobei die Verschlusseinrichtung (7) bei geschlossenem Gasauslass (5) gegen eine um den Gasauslass (5) gebildete Wandung des Ventilkörpers (2) oder bei geschlossenem Gaseinlass (4) gegen eine um den Gaseinlass (4) gebildete Wandung des Ventilkörpers (2) drückt.

11. Ventilvorrichtung (1) nach einem der vorhergehenden Ansprüche, mit einer Steuereinrichtung zum Zuführen des Starthaltestroms für einen vorbestimmten Zeitraum.

12. Ventilvorrichtung (1) nach einem der vorhergehenden Ansprüche, wobei
- der Ventilkörper (2) eine längliche Hohlkörperform aufweist; und
- der Magneteinsatz (6) entlang einer Längsrichtung der länglichen Hohlkörperform bewegbar gelagert ist.

13. Ventilvorrichtung (1) nach einem der vorhergehenden Ansprüche, ferner mit
- einer Thermostromzuführung zum Zuführen eines Thermohaltestroms von einem Thermoelement zum Elektromagneten zum Erregen des Elektromagneten, wobei
- durch den Thermohaltestrom die Verschlusseinrichtung (7) in der Halteposition festhaltbar ist.

14. Ventilvorrichtung (1) nach Anspruch 11, wobei der Starthaltestrom durch die Steuereinrichtung freigebbar ist, wenn sich der Elektromagnet in der zweiten Stellung befindet.

15. Ventilvorrichtung (1) nach einem der vorhergehenden Ansprüche, wobei
- die Verschlusseinrichtung (7) bei Erregen des Elektromagneten mit dem Starthaltestrom mit einer bestimmten Haltestromstärke durch den erregten Elektromagneten in der Halteposition festhaltbar ist; und
- die Verschlusseinrichtung (7) bei dieser bestimmten Haltestromstärke nicht durch den erregten Elektromagneten aus einer Position, in der die Verschlusseinrichtung (7) weiter von dem Elektromagneten beabstandet ist als in der Halteposition, in die Halteposition verschiebbar ist.

16. Ventilvorrichtung (1) nach einem der vorhergehenden Ansprüche, ferner mit
- einem in dem Ventilkörper (2) vorgesehenen Zündbrennergasauslass, der über einen Strömungskanal mit dem Gasauslass (5) verbunden ist;
- einem in dem Ventilkörper (2) vorgesehenen Hauptbrennergasauslass, dem über eine Öffnung in dem Strömungskanal Gas zuführbar ist; und
- einer Steuereinrichtung mit einem Regelkolben zum Verschließen und Öffnen der Öffnung am Strömungskanal;
- wobei der Ventilkörper (2) einen ersten Abschnitt und einen axial dazu angeordneten zweiten Abschnitt aufweist und der Gaseinlass (4) und der Magneteinsatz (6) in dem ersten Abschnitt und der Hauptbrennergasauslass und der Regelkolben im zweiten Abschnitt angeordnet sind.

## Claims

1. Valve device (1) for gas-operated equipment, with
- a valve body (2) having a gas inlet (4) and a gas outlet (5);
- a magnet insert (6) arranged in the valve body (2) with an electromagnet and with a closure device (7) linearly displaceable relative to the electromagnet for shutting and opening the gas outlet (5) or the gas inlet (4); and
- a holding current supply (8) for supplying a start holding current for excitation of the electromagnet; wherein
- the closure device (7) can be retained by the excited electromagnet in a holding position relative to the electromagnet;
**characterised in that** the electromagnet can be moved linearly back and forth between a first and a second position relative to the valve body (2), that
- the closure device (7) can be brought by a movement of the electromagnet from the first position into the second position into the holding position, that
- the excited electromagnetic can be moved from the second position into the first position, while the closure device (7) remains in the holding position relative to the electromagnet,

2. Valve device (1) in accordance with claim 1, wherein
- the closure device (7) is arranged in a closed position, in which the gas outlet (5) or the gas inlet (4) is shut by the closure device, when the electromagnet is in the second position; and
- the closure device (7) is arranged in an open position, in which the gas outlet (5) or the gas inlet (4) is open, when the electromagnet is in the first position and the closure device (7) is in the holding position.

3. Valve device (1) in accordance with one of the preceding claims, further with
- a controllable auxiliary energy source (9) or the start holding current.

4. Valve device (1) in accordance with one of the preceding claims, further with
- a mounting (10) movable in the valve body (2) to receive the magnet insert (6); wherein
- the electromagnet can be moved by a movement of the movable mounting (10) from the first position into the second position.

5. Valve device (1) in accordance with one of the preceding claims, further with
- an actuator (11) for moving the magnet insert (6).

6. Valve device (1) in accordance with one of the claims 5, wherein the actuator (11) has a stepping motor with or without current recognition, a solenoid, a pressure magnet, a spindle or a magnetic, hydraulic or pneumatic actuator.

7. Valve device (1) in accordance with one of the preceding claims, further with
- a resetting device (13) for return movement of the electromagnet.

8. Valve device (1) in accordance with one of the preceding claims, wherein
- the magnet insert (6) has a spring (12) for actuating the closure device (7) with a preload force;
- on excitation of the electromagnet, the closure device (7) is retained in the holding position against the preload force of the spring (12);

9. Valve device (1) in accordance with claim 8, wherein the gas outlet (5) or the gas inlet (4) is held closed by the preload force when the closure device (7) is not held in the holding position.

10. Valve device (1) in accordance with one of the preceding claims, wherein the closure device (7) presses against a wall of the valve body (2) formed around the gas outlet when the gas outlet (5) is closed or against a wall of the valve body (2) formed around the gas inlet (4) when the gas inlet (4) is closed.

11. Valve device (1) in accordance with one of preceding claims, with a control device for supplying the start holding current for a predetermined time period.

12. Valve device (1) in accordance with one of the preceding claims, wherein
- the valve body (2) has an elongated hollow body shape; and
- the magnet insert (6) is mounted to be movable along a longitudinal direction of the elongated hollow body shape.

13. Valve device (1) in accordance with one of the preceding claims, further with
- a thermoelectric current supply for supplying a thermoelectric holding current from a thermal element to the electromagnet for excitation of the electromagnet, wherein
- the closure device (7) can be retained in the holding position by the thermoelectric holding current.

14. Valve device (1) in accordance with claim 11, wherein the start holding current can be released by the control device when the electromagnet is in the second position.

15. Valve device (1) in accordance with one of the preceding claims, wherein
- the closure device (7) can be retained in the holding position by the excited electromagnet on excitation of the electromagnet with the start holding current with a specific holding current; and
- with this specific holding current, the closure device (7) cannot be displaced into the holding position by the excited electromagnet from a position in which the closure device (7) is spaced further from the electromagnet than in the holding position.

16. Valve device (1) in accordance with one of the preceding claims, further with
- an ignition burner gas outlet provided in the valve body (2) which is connected by means of a flow channel with the gas outlet (5);
- a main burner gas outlet provided in the valve body (2), to which gas can be supplied by an aperture in the flow channel; and
- a control device with a control piston for closing and opening the aperture in the flow channel;
- wherein the valve body (2) has a first section and a second section arranged axially to it and the gas inlet (4) and the magnet insert (6) are arranged in the first section and the main burner gas outlet and control piston in the second section.

## Revendications

1. Dispositif à soupape (1) pour un appareil fonctionnant au gaz, avec
- un corps de soupape (2) comportant une admission de gaz (4) et une sortie de gaz (5) ;
- un insert magnétique (6) disposé dans le corps de soupape (2) et pourvu d'un électroaimant et d'un dispositif de fermeture (7) qui est apte à coulisser linéairement par rapport à l'électroaimant et qui est destiné à obturer et à ouvrir la sortie de gaz (5) ou l'admission de gaz (4) et
- une amenée de courant de maintien (8) pour amener un courant de maintien de démarrage en vue d'exciter l'électroaimant ; étant précisé
- que le dispositif de fermeture (7) est apte à être immobilisé par rapport à l'électroaimant dans une position d'arrêt par ledit électroaimant excité ;
**caractérisé en ce que** l'électroaimant est apte à décrire un mouvement de va-et-vient linéaire entre une première et une seconde position par rapport au corps de soupape (2),
- **en ce que** le dispositif de fermeture (7) est apte à être amené dans la position d'arrêt grâce à un déplacement de l'électroaimant de la première position jusqu'à la seconde position, et
- **en ce que** l'électroaimant excité est apte à être déplacé de la seconde position jusqu'à la première position tandis que le dispositif de fermeture (7) reste dans la position d'arrêt par rapport à l'électroaimant.

2. Dispositif à soupape (1) selon la revendication 1, étant précisé
- que le dispositif de fermeture (7) est disposé dans une position fermée dans laquelle la sortie de gaz (5) ou l'admission de gaz (4) est obturée par le dispositif de fermeture (7) quand l'électroaimant se trouve dans la seconde position ; et
- que le dispositif de fermeture (7) est disposé dans une position ouverte dans laquelle la sortie de gaz (5) ou l'admission de gaz (4) est ouverte quand l'électroaimant se trouve dans la première position et que le dispositif de fermeture (7) est arrêté dans la position d'arrêt.

3. Dispositif à soupape (1) selon l'une des revendications précédentes, comprenant également
- une source d'énergie auxiliaire apte à être commandée (9) pour le courant de maintien de démarrage.

4. Dispositif à soupape (1) selon l'une des revendications précédentes, comprenant également
- un logement (10) mobile par rapport au corps de soupape (2), pour loger l'insert magnétique (6) ; étant précisé
- que l'électroaimant est apte à être déplacé de la première position jusqu'à la seconde position grâce à un déplacement du logement mobile (10).

5. Dispositif à soupape (1) selon l'une des revendications précédentes, comprenant également
- un actionneur (11) pour déplacer l'insert magnétique (6).

6. Dispositif à soupape (1) selon l'une des revendications précédentes 5, étant précisé que l'actionneur (11) comporte un moteur pas à pas avec ou sans détection de courant, un aimant de levage, un aimant de pression, une broche ou un organe de réglage magnétique, hydraulique ou pneumatique.

7. Dispositif à soupape (1) selon l'une des revendications précédentes, comprenant également
- un dispositif de rappel (13) pour ramener l'électroaimant.

8. Dispositif à soupape (1) selon l'une des revendications précédentes, étant précisé
- que l'électroaimant (6) comporte un ressort (12) pour contraindre le dispositif de fermeture (7) avec une force de contrainte préalable ;
- que lorsque l'électroaimant est excité, le dispositif de fermeture (7) est apte à être immobilisé dans la position d'arrêt à l'encontre de la position de contrainte préalable du ressort (12)

9. Dispositif à soupape (1) selon la revendication 8, étant précisé que la force de contrainte préalable maintient fermée la sortie de gaz (5) ou l'admission de gaz (4) quand le dispositif de fermeture (7) n'est pas arrêté dans la position d'arrêt.

10. Dispositif à soupape (1) selon l'une des revendications précédentes, étant précisé
- que le dispositif de fermeture (7) appuie, si la sortie de gaz (5) est fermée, contre une paroi du corps de soupape (2) formée autour de la sortie de gaz (5) ou, si c'est l'admission de gaz (4) qui est fermée, contre une paroi du corps de soupape (2) formée autour de l'admission de gaz (4).

11. Dispositif à soupape (1) selon l'une des revendications précédentes, comportant un dispositif de commande pour amener le courant de maintien de démarrage pour un laps de temps prédéfini.

12. Dispositif à soupape (1) selon l'une des revendications précédentes, étant précisé
- que le corps de soupape (2) présente une forme oblongue de corps creux ; et
- que l'insert magnétique (6) est monté mobile le long d'un sens longitudinal de la forme oblongue de corps creux.

13. Dispositif à soupape (1) selon l'une des revendications précédentes, comportant également
- une amenée de courant thermique pour amener un courant de maintien thermique d'un thermocouple jusqu'à l'électroaimant afin d'exciter ce dernier, étant précisé
- que grâce au courant de maintien thermique, le dispositif de fermeture (7) est apte à être immobilisé dans la position d'arrêt.

14. Dispositif à soupape (1) selon la revendication 11, étant précisé que le courant de maintien de démarrage est apte à être débloqué quand l'électroaimant se trouve dans la seconde position.

15. Dispositif à soupape (1) selon l'une des revendications précédentes, étant précisé
- que le dispositif de fermeture (7), quand l'électroaimant est excité avec le courant de maintien de démarrage avec une intensité de courant de maintien définie, est apte à être immobilisé dans la position d'arrêt par l'électroaimant excité ; et
- que le dispositif de fermeture (7), en présence de cette intensité de courant de maintien définie, n'est pas apte à être amené par coulissement par l'électroaimant excité d'une position dans laquelle le dispositif de fermeture (7) est plus éloigné de l'électroaimant que dans la position d'arrêt, jusqu'à la position d'arrêt.

16. Dispositif à soupape (1) selon l'une des revendications précédentes, comportant également
- une sortie de brûleur pilote qui est prévue dans le corps de soupape (2) et qui est reliée par un conduit d'écoulement à la sortie de gaz (5) ;
- une sortie de gaz de brûleur principal qui est prévue dans le corps de soupape (2) et vers laquelle du gaz peut être amené dans le conduit d'écoulement, par une ouverture ; et
- un dispositif de commande avec un piston de réglage pour fermer et ouvrir l'ouverture au niveau du conduit d'écoulement ;
- étant précisé que le corps de soupape (2) comporte une première section et une seconde section, disposée axialement par rapport à la première, et que l'admission de gaz (4) et l'insert magnétique (6) sont disposés dans la première section, et la sortie de brûleur principal et le piston de réglage dans la seconde.
